# EUROPÄISCHE PATENTSCHRIFT

(11) **EP 1 972 813 B1**
(45) Veröffentlichungstag und Bekanntmachung des Hinweises auf die Patenterteilung: **18.04.2012**
(21) Anmeldenummer: 08003331.9
(22) Anmeldetag: 25.02.2008
(51) Int. Cl.: F16D 13/75, F16D 13/58

(54) **Tellerfederhebelbaugruppe zum Betätigen einer selbstnachstellenden Reibungskupplung sowie selbstnachstellende Reibungskupplung**
Disc spring lever component for actuating a self-adjusting friction clutch and self-adjusting friction clutch
Composant de levier de ressort à disque destiné à l'actionnement d'un embrayage à friction à repositionnement automatique et embrayage à friction à repositionnement automatique

(30) Priorität: 22.03.2007 DE 102007013789
(43) Veröffentlichungstag der Anmeldung: 24.09.2008
(73) Patentinhaber: Schaeffler Technologies AG & Co. KG, 91074 Herzogenaurach (DE)
(72) Erfinder: Ortmann, Matthias, 77654 Offenburg (DE); Friedmann, Oswald, 77839 Lichtenau (DE)

(56) Entgegenhaltungen:
- EP-A1- 1 568 905
- WO-A1-2006/105750
- GB-A- 2 294 982

## Beschreibung

Die Erfindung betrifft eine Tellerfederhebelbaugruppe zum Betätigen einer Reibungskupplung mit integriertem Verschleißausgleich gemäß dem Oberbegriff des Anspruchs 1 sowie eine selbstnachstellende Reibungskupplung mit einer solchen Tellerfederhebelbaugruppe.

Insbesondere bei automatisierten Reibungskupplungen ist eine integrierte Verschleißnachstellung vorteilhaft, mittels der eine Kennlinie, die das übertragbare Kupplungsmoment in Abhängigkeit von der Stellung eines Aktors oder eines Betätigungsgliedes der Kupplung angibt, weitgehend unabhängig von einem Verschleiß der Reibbeläge der Kupplung konstant bleibt.

Bekannt sind Nachstelleinrichtungen mit einer Tellerfederhebelbaugruppe gemäß dem Oberbegriff des Anspruchs 1 und gemäß WO 2006/105 750.

Der Erfindung liegt die Aufgabe zugrunde, eine solche Tellerfederhebelbaugruppe dahingehend weiterzubilden, dass sie, in eine Reibungskupplung eingebaut, eine hohe Nachstellfunktionalität und -zuverlässigkeit aufweist.

Diese Aufgabe wird mit einer Tellerfederhebelbaugruppe zum Betätigen einer Reibungskupplung mit integriertem Verschleißausgleich gelöst, welche Tellerfederhebelbaugruppe einen Tellerfederhebel und eine Antriebsfeder enthält, welcher Tellerfederhebel einen in Umfangsrichtung durchgehenden, radial äußeren Ringscheibenbereich aufweist, von dem axial einwärts gerichtete Federzungen ausgehen, und welche Antriebsfeder einen mit einem radialen Spalt versehenen Ringteil aufweist, von dem radial einwärts gerichtete Speichen ausgehen, die an den Federzungen befestigt sind, wobei ein an einer Seite des Spaltes befindlicher Endbereich des Ringteils zumindest in Umfangsrichtung relativ zur Antriebsfeder festgelegt ist, der auf der anderen Seite des Spaltes befindliche Endbereich des Ringteils mit einer Klinke versehen ist und die Anordnung der Antriebsfeder auf dem Tellerfederhebel derart ist, dass sich die Weite des Spaltes bei einer konischen Verformung des Tellerfederhebels ändert, wodurch die Klinke bei in die Reibungskupplung eingebauter Tellerfederhebelbaugruppe geeignet ist, bei einer überschwelligen Verformung des Tellerfederhebels eine Verdrehung des Tellerfederhebels relativ zu einem mit dem Tellerfederhebel in Eingriff befindlichem Gegenbauteil der Reibungskupplung herbeizuführen, die zu einem Ausgleich von an Reibbelägen einer Kupplungsscheibe auftretendem Verschleiß führt, und wobei weiter die Tellerfederhebelbaugruppe an einer Stelle, die in Umfangsrichtung von einer Eingriffstelle zwischen dem Tellerfederhebel und dem Gegenbauteil in zur Verschleißnachstelldrehrichtung entgegengesetzter Richtung entfernt ist, eine Unwuchtmasse aufweist.

Mit Hilfe der Unwuchtmasse wird erreicht, dass der Tellerfederhebel sich bei einer Verschleißnachstellung mit geringeren Abstützkräften an einem Bauteil, relativ zu dem er an einer Rampenfläche für die Nachstellung verdreht wird, abstützt, wodurch die Verschleißnachstellung zuverlässiger und sensibler erfolgt.

Vorteilhafterweise ist die Unwuchtmasse in Umfangsrichtung etwa um 180° von einem Bereich entfernt, in dem eine etwa senkrecht zur radialen Richtung verlaufende Linie durch die Eingriffsstelle zwischen der Tellerfederhebelbaugruppe und dem Gegenbauteil in Verschleißnachstellrichtung eine Außenseite des Tellerfederhebels schneidet.

Die Unwuchtmasse kann durch die Geometrie der Tellerfeder und/oder der Antriebsfeder selbst gebildet sein.

Die Unwuchtmasse kann auch durch eine an der Antriebsfeder befestigte Zusatzmasse gebildet sein.

Vorteilhafterweise ist der äußere Ringscheibenbereich des Tellerfederhebels mit in Umfangsrichtung zur axialen Richtung geneigten Rampenflächen ausgebildet, die für eine Anlage an einem Zuganker geeignet sind, über den beim Einrücken der Kupplung eine Anpressplatte betätigt wird, wobei bei einer Verschleißnachstellung die Rampenflächen relativ zu dem Zuganker verdreht werden.

Gemäß einer weiteren bevorzugten Ausführungsform der erfindungsgemäßen Tellerfederhebelbaugruppe trägt der in Umfangsrichtung relativ zum Tellerfederhebel festgelegte Endbereich des Ringteils ein um eine zur Ebene des Tellerfederhebels etwa senkrechte Achse drehbares Schneckenrad, das mit einer Umfangsverzahnung ausgebildet ist, in die die Klinke in in einer Richtung drehübertragendem Eingriff ist und das an einer Stirnseite mit einer Schneckenrille versehen ist, die in Eingriff mit dem Gegenbauteil ist, so dass eine Verdrehung des Schneckenrads eine Relativdrehung zwischen dem Tellerfederhebel und dem Gegenbauteil bewirkt.

Die ist Erfindung ist weiter auf eine selbstnachstellende Reibungskupplung gerichtet, die eine Tellerfederhebelbaugruppe mit den vorstehend beschriebenen Merkmalen enthält.

Vorteilhaft ist eine solche Reibungskupplung derart aufgebaut, dass eine radiale Außenseite (86) des Tellerfederhebels (22) von einer radial einwärts gerichteten Innenwandung (88) eines Bauteils (74) zentriert wird, relativ zu dem der Tellerfederhebel bei einer Verschleißnachstellung verdreht wird.

Die Erfindung wird im Folgenden anhand schematischer Zeichnungen beispielsweise und mit weiteren Einzelheiten erläutert.

In den Figuren stellen dar:
- Fig. 1: einen Prinziphalbschnitt durch eine an sich bekannte Reibungskupplung,
- Fig. 2: eine schematische Zeichnung zur Erläuterung des Funktionsprinzips einer an sich bekannten Verschleißnachstellung,
- Fig. 3: eine weitere schematische Zeichnung zur Erläuterung des Funktionsprinzips einer an sich bekannten Verschleißnachstellung,
- Fig. 4: eine Aufsicht auf Teile eine Reibungskupplung mit einem Schneckenrad zur Verschleißnachstellung,
- Fig. 5: einen Schnitt durch die Anordnung gemäß Fig. 4 in der Ebene V-V,
- Fig. 6: eine Teilansicht der Anordnung gemäß Fig. 4, geschnitten längs der Ebene Vi-Vi,
- Fig. 7: einen perspektivische Ansicht einer erfindungsgemäßen Tellerfederhebelbaugruppe,
- Fig. 8: eine Schnittansicht der Tellerfederhebelbaugruppe gemäß Fig. 7, geschnitten in der Ebene VIII-VIII der Fig. 7.

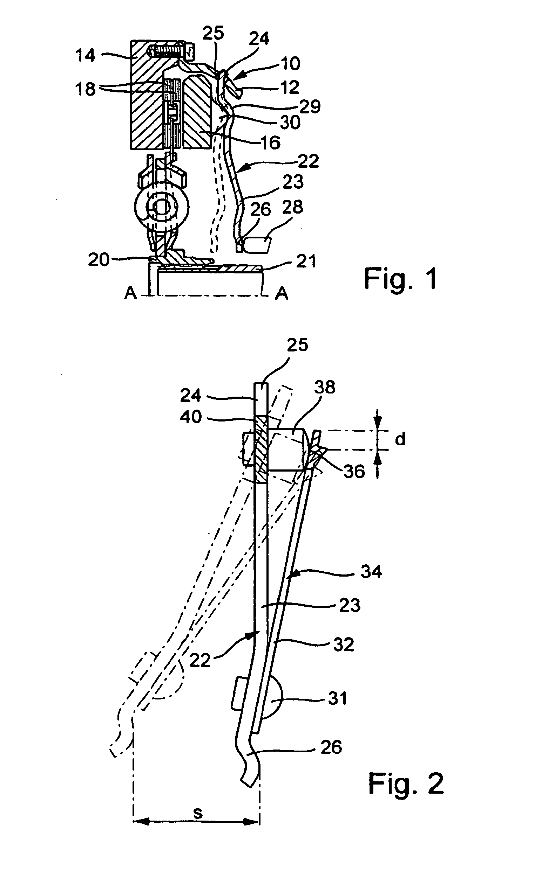

Fig. 1 zeigt einen Halbschnitt durch eine an sich bekannte Reibungskupplung 10 mit der Drehachse A-A.

Die Kupplung enthält einen Deckel bzw. ein Gehäuse 12, der bzw. das starr mit einer Gegendruckplatte 14 und drehfest mit einer Schwungscheibe einer Brennkraftmaschine verbunden ist. Weiter ist eine mit dem Gehäuse 12 drehfest, jedoch axial verschiebbar verbundene Anpressplatte 16 vorgesehen, mittels der Reibbeläge 18 gegen die Gegendruckplatte 14 pressbar sind, welche Reibbeläge an einer Kupplungsscheibe 20 angebracht sind, die drehfest mit einer Welle 21, beispielsweise einer Getriebeeingangswelle, verbunden ist.

Zum axialen Bewegen der Anpressplatte 16 ist ein insgesamt ringscheibenförmiger Tellerfederhebel 22 vorgesehen, der aus einzelnen in Umfangsrichtung nebeneinander angeordneten, radial einwärts gerichteten und radial außen über einen in Umfangsrichtung geschlossenen Ringscheibenbereich 24 miteinander verbundenen Federzungen 23 besteht. Im dargestellten Beispiel stützt sich der Tellerfederhebel 22 an seinem äußeren Umfangsrand 25 an dem Gehäuse 12 ab und ist an seinem inneren Umfangsrand 26 mittels eines Betätigungsglieds 28 axial bewegbar. Das Betätigungsglied 28 enthält beispielsweise ein mit der Achse A-A konzentrisches Ringlager, so dass eine lineare Bewegung eines ortsfesten Aktors in eine lineare Bewegung des inneren Umfangsrands 26 des sich drehenden Tellerfederhebels 22 umsetzbar ist.

Der Tellerfederhebel 22 wirkt über Rampenflächen 29 mit Rampenflächen 30 der Anpressplatte 16 zusammen, wobei die Rampenflächen in Umfangsrichtung mit unterschiedlicher Dicke ausgebildet sind, so dass eine Relativdrehung zwischen der Anpressplatte 16 und dem Tellerfederhebel 22 einen Ausgleich von Verschleiß der Reibbeläge 18 oder sonstigem Verschleiß in Elementen der Kupplung ermöglicht. Gepunktet ist die Stellung des Tellerfederhebels 22 eingezeichnet, in der die Anpressplatte 16 gegen die Reibbeläge 18 gedrückt ist, d.h. die Kupplung geschlossen oder zugedrückt ist. Die mit ausgezogenen Linien dargestellte Stellung des Tellerfederhebels 22 entspricht dem offenen bzw. nicht eingerückten Zustand der Kupplung.

In an sich bekannter Weise kann die Kupplung durch einfache Umkonstruktion als zugedrückte, zugezogene oder aufgedrückte bzw. aufgezogene Kupplung konstruiert sein.

Fig. 2 zeigt das Grundprinzip einer an sich bekannten Verschleißnachstellvorrichtung. Dabei zeigt Fig. 2 einen Halbschnitt durch den Tellerfederhebel 22 mit zugehörigen Bauteilen.

Gemäß Fig. 2 sind die Federzungen 23 des Tellerfederhebels 22 beispielsweise durch Nieten 31 mit Speichen 32 einer insgesamt mit 34 bezeichneten und insgesamt konzentrisch zum Tellerfederhebel angeordneten Antriebsfeder verbunden, die einen äußeren in Umfangsrichtung durch einen in Fig. 2 nicht sichtbaren radialen Zwischenraum bzw. Spalt unterbrochenen Ringteil 36 aufweist, der die Speichen 32 verbindet. Die Antriebsfeder 34 stützt sich an dem Tellerfederhebel 22 über Distanzstücke 38 ab, die beispielsweise mit dem Tellerfederhebel 22 vernietet sind und zu dem Ringteil 36 hin eine ballige Oberfläche aufweisen.

Wenn die Kupplung eingerückt wird, wird der Tellerfederhebel 22 an seinem inneren Umfangsrand 26 um die Strecke s nach links bewegt und schwenkt unter konischer Verformung um eine am Gehäuse 12 (Fig. 1) ausgebildete Gegenlagerung, an der sich der äußere Ringscheibenbereich 23 abstützt, und in einem gewissen Ausmaß um die sich gem. Fig. 1 nach links bewegende Abstützung an der Anpressplatte 16.

Beim Verschwenken des Tellerfederhebels 22 bleibt der Abstand zwischen den Nieten 31 und dem Ringscheibenbereich 23 im Wesentlichen konstant, so dass sich das durch den Tellerfederhebel 22, die Antriebsfeder 34 und das Distanzstück 38 gebildete Dreieck derart verformt, dass sich die Antriebsfeder 34 unter Abgleiten auf dem Distanzstück 38 mit ihrem Ringteil 36 um die Strecke d radial einwärts bewegt. Dadurch verringert sich der Umfang des Ringteils 36. Es versteht sich, dass die in Fig. 2 im Schnitt dargestellte Verformung insgesamt jeweils eine konische Verformung der Bauteile ist.

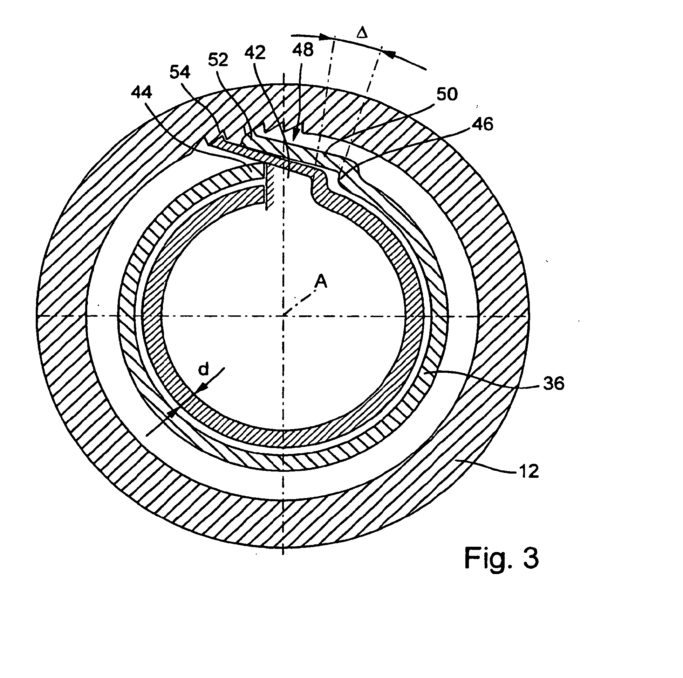

Fig. 3 verdeutlicht die Verhältnisse in Aufsicht und zeigt zusätzlich weitere funktionswesentliche Details der Anordnung. Der Ringteil 36 ist in Umfangsrichtung unterbrochen bzw. mit einem radialen Spalt 42 versehen. Ein dem Spalt 42 benachbarter Endbereich 44 des Ringteils 36 ist in Umfangsrichtung relativ zu dem Gehäuse 12 (Fig. 1) der Kupplung fixiert. Der andere, an den Spalt 42 grenzende Endbereich 46 des Ringteils 36 ist mit einer Klinke 48 versehen, die aus einem den Spalt 42 radial außen überlagernden Federarm 50 besteht, der an seinem freien Ende wenigstens einen Zahn 52 aufweist, der von dem Federarm 50 radial auswärts in Eingriff in eine Verzahnung 54 gedrängt ist. Die Verzahnung 54 ist am Gehäuse 12 oder an einem eigenen Bauteil, beispielsweise einem Verstellring, ausgebildet. Wie ersichtlich, ist der Zahneingriff derart, dass bei einer Bewegung der Klinke 48 relativ zu der Verzahnung 54 in Gegenuhrzeigerrichtung die Klinke die Verzahnung unter elastischer Verformung des Federarms 50 im Sinne eines Freilaufes überläuft, wohingegen in Gegenrichtung ein Drehmoment übertragender Eingriff zwischen dem Zahn 52 und der Verzahnung 54 besteht.

Wenn der mit einem Schlitz bzw. Spalt versehene Ringteil 36 aus der ausgezogenen Stellung, die der nicht betätigten Stellung der Kupplung bzw. der in Fig. 2 ausgezogenen Stellung entspricht, durch Betätigen der Kupplung um den Radialweg d nach innen gezogen wird (gestrichelt dargestellte Stellung), deckt er aufgrund seiner konstanten Umfangslänge einen größeren Winkelbereich ab, d.h. die Breite des Spaltes 42 nimmt um das Maß **Δ** ab. Da der Endbereich 44 des Ringteils 36 in tangentialer Richtung festgelegt ist, führt dies zu einer Tangentialbewegung bzw. Bewegung in Umfangsrichtung um die Strecke **Δ** des mit der Klinke 48 versehenen Endbereichs 46 des Ringteils 36. Dies wird dadurch ermöglicht, dass der Ringteil 36 über biegeweiche Speichen 32 (in Fig. 3 nicht dargestellt) mit dem Tellerfederhebel 22 verbunden ist und die Berührstellen zwischen dem Ringteil 36 und den Distanzstücken 38 eine tangentiale Gleitbewegung zulassen. Durch diesen Mechanismus entsteht ein nahezu lineares Verhältnis zwischen Einrückweg bzw. Schwenkwinkel des Tellerfederhebels 22 und dem Tangentialweg **Δ** der Antriebsfeder 34 bzw. von deren Ringteil 36. Im Normalfall reicht der Tangentialweg an der Klinke 48 gerade nicht aus, um in den nächsten Zahn der Verzahnung 54 zu springen. Mit zunehmendem Kupplungsverschleiß erhöht sich jedoch die Tangentialbewegung und die Klinke erreicht die nächste Zahnlücke. Beim nachfolgenden Öffnen der Kupplung schiebt die Antriebsfeder bzw. der Ringteil 36 die Klinke fest in die Verzahnung zurück, wobei die Klinke an einem Zurückgleiten gehindert ist und die Antriebsfeder somit über die Klinke eine Tangentialkraft auf den Rampenmechanismus 29, 30 (Fig. 1) ausübt, so dass durch eine Relativverdrehung zwischen dem Tellerfederhebel und dem Gehäuse eine Nachstellung erzielt wird. Das Verhältnis von d zu Δ lässt sich durch die Konstruktion des Verbandes Tellerfederhebel-Antriebsfeder beeinflussen.

Das geschilderte Grundprinzip lässt sich in unterschiedlicher Weise zur Verschleißnachsteliung nutzen:

Die Antriebsfeder 34 bewirkt bei Belagverschleiß eine Verschiebung der Klinke 48 relativ zu der Verzahnung 54, die als Umfangsverzahnungssegment ausgebildet ist und über einen Umfangswinkelbereich reicht, der zum Ausgleich des gesamten Verschleißes ausreicht. Welches Bauteil dabei feststeht und welches sich dreht, hängt von der Konstruktion ab. Wenn die Verzahnung feststeht, wird der Tellerfederhebel mit Rampen versehen und ist relativ zum Kupplungsgehäuse verdrehbar. Die Antriebsfeder kann sich dann zusammen mit dem Tellerfederhebel verdrehen. Die Rampen des Tellerfederhebels verändern die Axialposition der Anpressplatte und gleichen den Verschleiß aus.

Wenn die Antriebsfeder dazu genutzt wird, um einen Verstellring (nicht dargestellt) anzutreiben, wird der Tellerfederhebel-Antriebsfeder-Verbund im Kupplungsgehäuse gegen Verdrehen gesichert. Die Verzahnung ist dann Teil des mit Rampen versehenen Verstellrings, wobei die Rampen sowohl zwischen dem Tellerfederhebel und dem Verstellring als auch zwischen dem Verstellring und einem mit Anpressplatte drehfest verbundenem Bauteil angeordnet sein können.

Bei einer abgeänderten Ausführungsform, bei der die Klinke 48 den Spalt 42 beispielsweise nicht vollständig überbrückt, ist auch der Endbereich 44 mit einer Verzahnung ausgebildet, die in eine Richtung bewegungsübertragend in eine Gegenverzahnung eingreift, die in dem Bauteil ausgebildet ist, in dem auch die Verzahnung 54 ausgebildet ist. Dadurch kann die Antriebsfeder bzw. der Tellerfederhebel verdrehsicher gehalten werden, während die Klinke 48 die Verzahnung 54 überläuft.

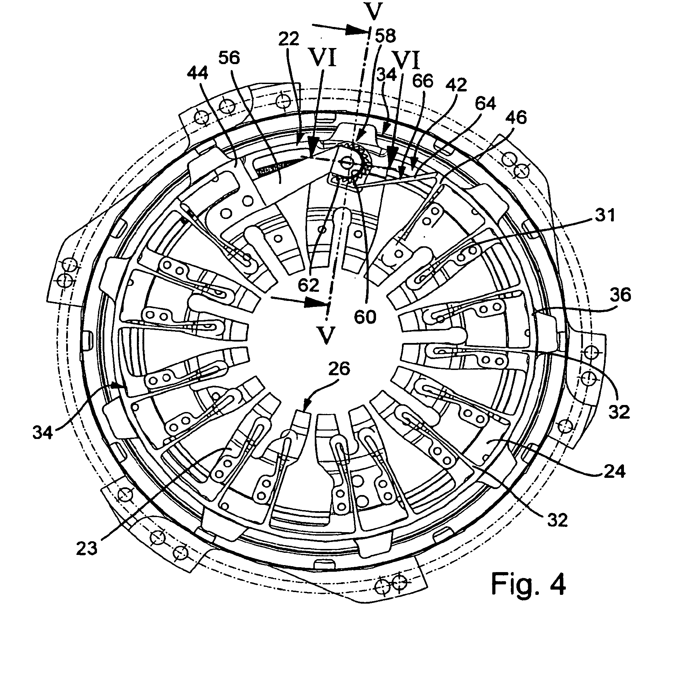

Eine weitere Ausführungsform einer Verschleißnachstelleinrichtung, bei der das geschilderte Prinzip verwendet wird, wird nachfolgend anhand der Fig. 4 bis 6 erläutert.

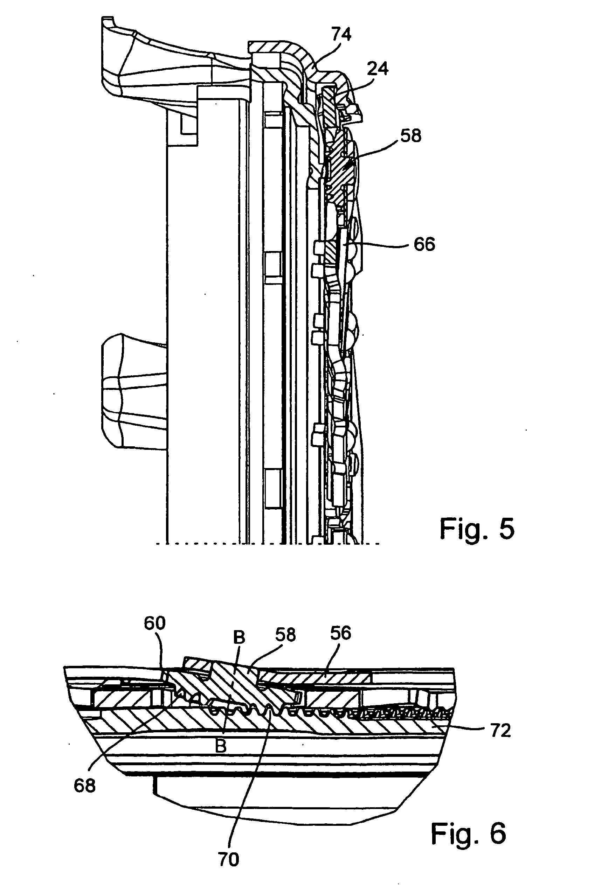

Fig. 4 zeigt eine Aufsicht auf eine Kupplung bei abgenommenem Zuganker; Fig. 5 zeigt einen Schnitt längs V-V der Fig. 4 und Fig. 6 zeigt einen Schnitt längs der Linie VI-VI der Fig. 4. Sich funktional entsprechende Bauteile sind mit denselben Bezugszeichen belegt wie in Fig. 1 und 2.

Deutlich sichtbar ist der insgesamt mit 22 bezeichnete Tellerfederhebel mit dem in Umfangsrichtung durchgehenden äußeren Ringscheibenbereich 24, der die radial einwärts vorstehenden Federzungen 23 miteinander verbindet. Auf dem Tellerfederhebel 22 ist die Antriebsfeder 34 insgesamt gleichachsig mit dem Tellerfederhebel 22 angeordnet. Der äußere Ringteil 36 ist in Umfangsrichtung durch einen radialen Zwischenraum bzw. Spalt 42 unterbrochen. Von dem Ringteil 36 gehen radial einwärts gerichtete Speichen 32 aus, die an ihren radial inneren Enden nach außen umgebogen sind und in Laschen enden, die mit den Federzungen 24 vernietet sind.

Mit dem gemäß Fig. 4 links des Spaltes 42 angeordneten und relativ zum Tellerfederhebel 22 zumindest in Umfangsrichtung festgelegten Endbereich 44 der Antriebsfeder 34 ist ein Blattfederarm 56 beispielsweise durch Nieten starr verbunden, an dessen freiem Ende ein Schneckenrad 58 drehbar gelagert ist. Das Schneckenrad 58 ist an seinem Umfang mit einer Verzahnung 60 ausgebildet, in die eine Klinkenverzahnung 62 eingreift, die am Ende eines Federarms 64 ausgebildet ist, der von dem rechts des Spaltes befindlichen Endbereich 46 des Ringteils 36 der Antriebsfeder 34 vorsteht. Die Klinkenverzahnung 62 enthält mindestens einen Zahn und bildet zusammen mit dem Federarm 64 eine Klinke 66, die in einer Richtung sperrt und in die andere Richtung "frei läuft".

Der Federarm 64 ist derart ausgebildet, dass er die Klinkenverzahnung 62 in Eingriff in die Umfangsverzahnung 60 drängt. Die Verzahnungen 62 und 60 sind derart geformt, dass im dargestellten Beispiel gemäß Fig. 4 die Klinkenverzahnung 62 das Schneckenrad 58 in Gegenuhrzeigerrichtung dreht, jedoch eine Drehung des Schneckenrades 58 in Uhrzeigerrichtung nicht zwangsläufig erfolgt, sondern sich die Verzahnungen dabei überlaufen können.

Wie aus den Fig. 4 und 5 ersichtlich, ist das Schneckenrad 58 an seiner Unterseite mit einer spiralförmig verlaufenden Schneckenrille 68 versehen. Die Achse B-B, um die das Schneckenrad 58 drehbar im Blattfederarm 56 gelagert ist, ist zur Umfangsrichtung derart etwas geneigt, dass nur einer der beiden bezogen auf die Drehachse B-B in Umfangsrichtung liegenden Bereiche der Schneckenrille 68 in selbsthemmendem Eingriff mit einer Gegenverzahnung 70 ist, deren Zähne radial gerichtet sind und die in einem mit dem Gehäuse 12 starr verbundenen Bauteil oder am Gehäuse selbst ausgebildet ist. Im Unterschied zur Ausführungsform gemäß Fig. 1 untergreift der Umfangsrand 25 des Tellerfederhebels 22 einen Zuganker 74, der in an sich bekannter Weise eine Grundplatte der Kupplung übergreift und eine gemäß Fig. 5 linksseitig angeordnete Anpressplatte (nicht dargestellt) betätigt. Eine solche Konstruktion ist insbesondere bei Doppellkupplungen, wie sie für Doppellkupplungs- bzw. Parallelschaltgetriebe verwendet werden, vorteilhaft.

Die Funktion der Verschleißnachstelleinrichtung ist folgende:

Es sei angenommen, die Weite des Spaltes 42 bzw. die Länge des äußeren Umfangs der Antriebsfeder 34 nehme bei Bewegung des Tellerfederhebels 22 aus der gepunkteten Stellung der Fig. 1 in die durchgezogene Stellung bzw. zur gezielten Nachstellung der Kupplung über die durchgezogen dargestellte Stellung hinaus nach rechts über ein vorbestimmtes Maß hinaus ab. Wenn dieses Maß bzw. dieser Schwellwert das Modul der Verzahnungen 60, 62 übersteigt, überfährt die Klinkenverzahnung 62 die Umfangsverzahnung 60 gemäß Fig. 3 nach links, so dass bei einer anschließenden Rückkehr des Tellerfederhebels in die Stellung gemäß Fig. 1 das Schneckenrad 58 in Gegenuhrzeigerrichtung verdreht wird. Infolge des Eingriffs der Schneckenrille 68 in die Gegenverzahnung 70, wobei dieser Eingriff durch eine entsprechende Vorspannung des Blattfederarms 56 gewährleistet ist, führt dies zu einer Relativverdrehung zwischen dem Tellerfederhebel 22 und dem gehäusefesten Bauteil 72 bzw. dem Gehäuse 12, wodurch sich ein axialer Abstand zwischen dem Umfangsrand 24 und dem Zuganker 74, die sich über nicht dargestellte Rampenflächen 76, 78 aneinander abstützen, im Sinne einer Verschleißnachstellung verändert.

Eine Eigenart der beschriebenen, mit der Baugruppe aus Tellerfederhebel und Antriebsfeder arbeitenden Verschleißnachstelleinrichtung liegt darin, dass der Tellerfederhebel bei Verdrehung des Schneckenrades und daraus resultierender Verdrehung relativ zu Rampenflächen verstärkt gegen die in Verdrehrichtung etwa tangential zu der Eingriffsstelle zwischen der Schneckenrille und dem Gegenbauteil liegenden Rampenflächen bzw. sogar gegen die Innenseite des Zugankers gedrückt wird, was zu erhöhter Reibung und zu einer vergrößerten Verstellkraft führt.

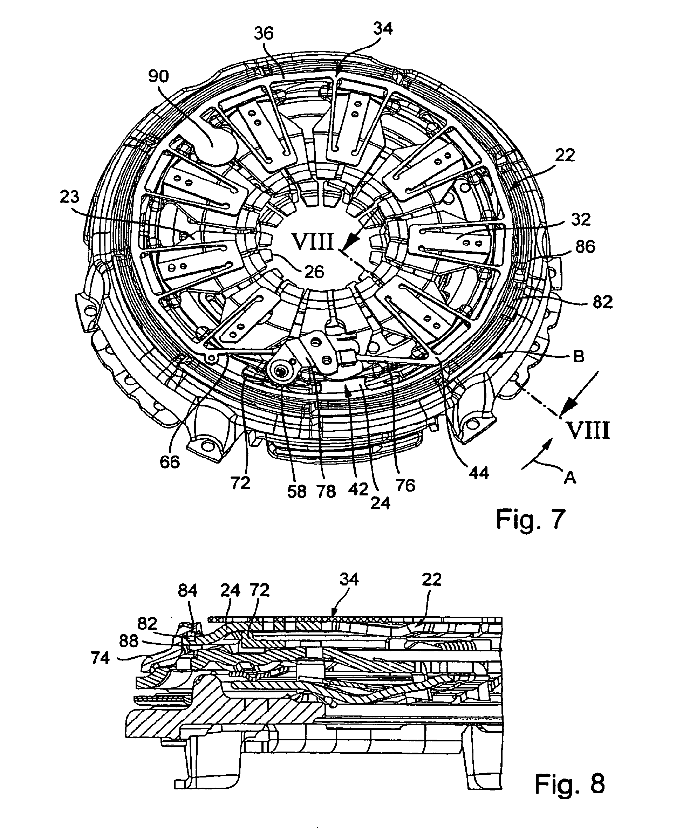

Anhand der Fig. 7 und 8 wird eine Weiterbildung der Baugruppe aus Tellerfederhebel und Antriebsfeder erläutert, bei der eine solche erhöhte Reibung, die einer präzisen Nachstellung entgegensteht, verhindert wird.

Fig. 7 zeigt eine perspektivische Aufsicht auf eine Tellerfederhebelbaugruppe bei abgenommenem Zuganker und Fig. 8 zeigt einen Schnitt längs der Ebene VIII-VIII der Fig. 7 bei vorhandenem Zuganker. Für sich entsprechende Bauteile sind die gleichen Bezugszeichen wie in Fig. 4 verwendet.

Die Speichen 32 der Antriebsfeder 34 gemäß Fig. 7 sind unterschiedlich zu denen der Fig. 4 ausgebildet, könnten jedoch auch gleich oder in anderer Art ausgebildet sein. Bei der Ausführungsformen gemäß Fig. 7 sind die radial inneren Enden je zweier Speichen über eine radial auswärts gerichtete Lasche verbunden, die mit dem Tellerfederhebel 22 beispielsweise durch Nieten verbunden ist. Die Festlegung in Umfangsrichtung der Antriebsfeder 34 relativ zum Tellerfederhebel 22 erfolgt nicht unmittelbar an einem Endbereich 44 der Antriebsfeder 34; der Endbereich 44 ist über einen Federarm 76 mit einer Haltebaugruppe 78 verbunden, die an dem Tellerfederhebel 22 befestigt ist und das Schneckenrad 58 trägt. Mittels der Haltebaugruppe 78 kann ein Spiel in Umfangsrichtung zwischen dem Schneckenrad 58 und dem Endbereich 44 eingestellt werden und ist es möglich, das Schneckenrad 58 in einfacher Weise auszuwechseln. Die in Fig. 7 nicht dargestellte Schneckenrille des Schneckenrades 58 greift in eine Verzahnung ein, die in einer umlaufenden gehäusefesten Rippe 72 ausgebildet ist, die dem Bauteil 72 der Fig. 6 entspricht und die längs ihres sonstigen Umfangs ein Gegenlager für den Tellerfederhebel 22 bildet. Die Ausbildung des Schneckenrades und von dessen Halterung an der Antriebsfeder 34 könnte auch ähnlich wie in Fig. 4 ausgebildet sein.

In Fig. 7 deutlich sichtbar sind am Ringscheibenbereich 24 des Tellerfederhebels 22 ausgebildete Rampenflächen 82, die in Umfangsrichtung verlaufen und zur Fläche des Tellerfederhebels 22 geneigt sind. Die Rampenflächen 82 des Tellerfederhebels 22 sind in Anlage an entsprechenden Rampenflächen 84 des Zugankers 74 (Fig. 8), so dass sich bei einer Verschleißnachstellung der axiale Abstand zwischen dem radial äußeren Rand des Tellerfederhebels 22 und dem in diesen übergreifenden radial inneren Rand des Zugankers 74 vergrößert.

Ein weiterer Unterschied zwischen der Ausführungsform gemäß Fig. 4 und der der Fig. 7 liegt darin, dass der Ringscheibenbereich 24 des Tellerfederhebels 22 abgekröpft ist, so dass die Ebene, in der der radial äußere Rand des Tellerfederhebels 22 liegt, gegenüber der Ebene der anderen Bereiche des Tellerfederhebels sowie der Ebene entfernt, in der die Antriebsfeder 34 liegt, in eine Richtung weg von der Antriebsfeder versetzt ist. Dadurch kann die Antriebsfeder 34 radial außen unmittelbar auf dem Tellerfederhebel 24 aufliegen und kann der Zugangriff 74 axial kürzer ausgebildet werden.

Wie insbesondere aus Fig. 8 ersichtlich, dient der Zuganker 74 zusätzlich zur radialen Zentrierung des Tellerfederhebels 24, in dem dessen Außenrand gegebenenfalls mit geringem Spiel an einer radial einwärts gerichteten Wandung des Zugankers 74 anliegt.

Wenn eine Nachstellung erfolgt, wird der Tellerfederhebel 22 in Richtung des Pfeils A der Fig. 7 relativ zur Ankerplatte verstellt. Die von der Eingriffsstelle zwischen der Schneckenrille des Schneckenrades und der Verzahnung im gehäusefesten Bauteil 72 ausgeübte, gemäß Fig. 7 in Gegenuhrzeigerrichtung wirksame Kraft drängt die radiale Außenseite des Tellerfederhebels 22 im Umfangsbereich B, der etwa dort liegt, wo die Tangente an das kreisrippenartig ausgebildete gehäusefeste Bauteil 72 durch die Eingriffsstelle zwischen dem Schneckenrad 58 und dem Bauteil 72 die in Umfangsrichtung liegende radiale Außenseite des Tellerfederhebels 22 schneidet, in Anlage an die den Tellerfederhebel 22 zentrierende Innenwandung des Zugankers 74. Die radial auswärts gerichtete Außenseite des Tellerfederhebels ist in Fig. 7 mit 86 bezeichnet. Die Innenwandung der Ankerplatte 74 ist in Fig. 8 mit 88 bezeichnet.

Um eine verstärkte Anlage der Außenseite 86 des Tellerfederhebels 22 an der Innenwandung 88 der Ankerplatte 72 zu vermeiden, ist die Antriebsfeder 34 an einer dem Bereich B etwa gegenüberliegenden Stelle mit einer Unwuchtmasse 90 versehen, die bewirkt, dass bei drehender Kupplung die Anlagekraft zwischen dem Tellerfederhebel 22 und dem Zuganker 74 im Bereich B entlastet ist. Auf diese Weise wird erreicht, dass die Verschleißnachstellung unter verminderter Anlage- bzw. Reibungskraft erfolgt. Die Unwuchtmasse 90 kann eine gesonderte an der Antriebsfeder 34 angebrachte Masse, eine gesondert an dem Tellerfederhebel 22 angebrachte Masse sein oder einfach dadurch gebildet werden, dass die Antriebsfeder oder die Tellerfeder geometrisch derart ausgebildet ist, dass sie bei Drehung eine Unwucht aufweist, die den Bereich B entlastet. Dabei kann die Baugruppe aus Tellerfederhebel und Antriebsfeder derart gebaut sein, dass sie in dem dem Bereich B gegenüberliegenden Bereich gezielt schwerer ist oder im Bereich B gezielt leichter ist.

### Bezugszeichenliste

- 10: Reibungskupplung
- 12: Gehäuse
- 14: Gegendruckplatte
- 16: Anpressplatte
- 18: Reibbelag
- 20: Kupplungsscheibe
- 21: Welle
- 22: Tellerfederhebel
- 23: Federzunge
- 24: Ringscheibenbereich
- 25: äußerer Umfangsrand
- 26: innerer Umfangsrand
- 28: Betätigungsglied
- 29: Rampenfläche
- 30: Rampenfläche
- 31: Nieten
- 32: Speichen
- 34: Antriebsfeder
- 36: Ringteil
- 38: Distanzstück
- 42: Spalt
- 44: Endbereich
- 46: Endbereich
- 48: Klinke
- 50: Federarm
- 52: Zahn
- 54: Verzahnung
- 56: Blattfederarm
- 58: Schneckenrad
- 60: Umfangsverzahnung
- 62: Klinkenverzahnung
- 64: Federarm
- 66: Klinke
- 68: Schneckenrille
- 70: Gegenverzahnung
- 72: Bauteil
- 74: Zuganker
- 76: Federarm
- 78: Haltebaugruppe
- 80: Rippe
- 82: Rampenfläche
- 84: Rampenfläche
- 86: Außenseite
- 88: Innenwandung
- 90: Unwuchtmasse

## Patentansprüche

1. Tellerfederhebelbaugruppe zum Betätigen einer Reibungskupplung mit integriertem Verschleißausgleich, welche Tellerfederhebelbaugruppe einen Tellerfederhebel (22) und eine Antriebsfeder (34) enthält, welcher Tellerfederhebel einen in Umfangsrichtung durchgehenden, radial äußeren Ringscheibenbereich (24) aufweist, von dem axial einwärts gerichtete Federzungen (23) ausgehen, und welche Antriebsfeder einen mit einem radialen Spalt (42) versehenen Ringteil (36) aufweist, von dem radial einwärts gerichtete Speichen (32) ausgehen, die an den Federzungen befestigt sind, wobei ein an einer Seite des Spaltes befindlicher Endbereich (44) des Ringteils zumindest in Umfangsrichtung relativ zur Antriebsfeder festgelegt ist, der auf der anderen Seite des Spaltes befindliche Endbereich des Ringteils mit einer Klinke (66) versehen ist und die Anordnung der Antriebsfeder auf dem Tellerfederhebel derart ist, dass sich die Weite des Spaltes (42) bei einer konischen Verformung des Tellerfederhebels ändert, wodurch die Klinke bei in die Reibungskupplung eingebauter Tellerfederhebelbaugruppe geeignet ist, bei einer überschwelligen Verformung des Tellerfederhebels eine Verdrehung des Tellerfederhebels relativ zu einem mit der Tellerfederhebelbaugruppe (22, 34) in Eingriff befindlichem Gegenbauteil (72) der Reibungskupplung herbeizuführen, die zu einem Ausgleich von an Reibbelägen einer Kupplungsscheibe auftretendem Verschleiß führt, **dadurch gekennzeichnet, dass** die Tellerfederhebelbaugruppe (22, 34) an einer Stelle, die in Umfangsrichtung von einer Eingriffstelle zwischen dem Tellerfederhebel (22) und dem Gegenbauteil (72) in zur Verschleißnachstelldrehrichtung (A) entgegengesetzter Richtung entfernt ist, eine Unwuchtmasse (90) aufweist.

2. Tellerfederhebelbaugruppe nach Anspruch 1, **dadurch gekennzeichnet, dass** die Unwuchtmasse (90) in Umfangsrichtung etwa um 180° von einem Bereich (B) entfernt ist, in dem eine etwa senkrecht zur radialen Richtung verlaufende Linie durch die Eingriffsstelle zwischen der Tellerfederhebelbaugruppe (22, 34) und dem Gegenbauteil (72) in Verschleißnachstelidrehrichtung (A) eine Außenseite (86) des Tellerfederhebels (22) schneidet.

3. Tellerfederhebelbaugruppe nach Anspruch 1 oder 2, **dadurch gekennzeichnet, dass** die Unwuchtmasse (90) durch die Geometrie der Tellerfeder (22) und/oder der Antriebsfeder (34) gebildet ist.

4. Tellerfederhebelbaugruppe nach einem der Ansprüche 1 bis 3, **dadurch gekennzeichnet, dass** die Unwuchtmasse (90) durch eine an der Antriebsfeder (34) und/oder der Tellerfeder (22) befestigte Zusatzmasse gebildet ist.

5. Tellerfederhebelbaugruppe nach einem der Ansprüche 1 bis 4, **dadurch gekennzeichnet, dass** der äußere Ringscheibenbereich (24) des Tellerfederhebels (22) mit in Umfangsrichtung zur axialen Richtung geneigten Rampenflächen (82) ausgebildet ist, die für eine Anlage an einem Zuganker (74) geeignet sind, über den beim Einrücken der Kupplung eine Anpressplatte betätigt wird, wobei bei einer Verschleißnachstellung die Rampenflächen relativ zu dem Zuganker verdreht werden.

6. Tellerfederhebelbaugruppe nach einem der Ansprüche 1 bis 5, **dadurch gekennzeichnet, dass** der in Umfangsrichtung relativ zum Tellerfederhebel (22) festgelegte Endbereich (44) des Ringteils (36) ein um eine zur Ebene des Tellerfederhebels etwa senkrechte Achse drehbares Schneckenrad (58) trägt, das mit einer Umfangsverzahnung (60) ausgebildet ist, in die die Klinke (66) in einer Richtung drehübertragend eingreift und das an einer Stirnseite mit einer Schneckenrille (68) versehen ist, die in Eingriff mit dem Gegenbauteil (72) ist, so dass eine Verdrehung des Schneckenrades eine Relativdrehung zwischen dem Tellerfederhebel und dem Gegenbauteil bewirkt.

7. Selbstnachstellende Reibungskupplung, enthaltend eine Tellerfederhebelbaugruppe nach einem der Ansprüche 1 bis 6.

8. Selbstnachstellende Reibungskupplung nach Anspruch 7, **dadurch gekennzeichnet, dass** eine radiale Außenseite (86) des Tellerfederhebels (22) von einer radial einwärts gerichteten Innenwandung (88) eines Bauteils (74) zentriert wird, relativ zu dem der Tellerfederhebel bei einer Verschleißnachstellung verdreht wird.

## Claims

1. Cup-spring lever subassembly for actuating a friction clutch with integrated wear compensation, which cup-spring lever subassembly contains a cup-spring lever (22) and a drive spring (34), which cup-spring lever has a circumferentially continuous radially outer annular-disc region (24), from which axially inward-directed spring tongues (23) emanate, and which drive spring has an annular part (36) which is provided with a radial gap (42) and from which emanate radially inward-directed spokes (32) which are fastened to the spring tongues, an end region (44), located on one side of the gap, of the annular part being secured in relation to the drive spring at least in the circumferential direction, the end region, located on the other side of the gap, of the annular part being provided with a pawl (66), and the arrangement of the drive spring on the cup-spring lever being such that the width of the gap (42) changes in the event of conical deformation of the cup-spring lever, with the result that, when the cup-spring lever subassembly is installed into the friction clutch, the pawl is suitable, in the event of above-threshold deformation of the cup-spring lever, for bringing about rotation of the cup-spring lever in relation to a counter-component (72), in engagement with the cup-spring lever subassembly (22, 34), of the friction clutch, which rotation leads to a compensation of wear occurring on friction linings of a clutch disc, **characterized in that** the cup-spring lever subassembly (22, 34) has an unbalance mass (90) at a point which is remote in the circumferential direction from an engagement point between the cup-spring lever (22) and the counter-component (72) in a direction opposite to the wear adjustment rotation direction (A).

2. Cup-spring lever subassembly according to Claim 1, **characterized in that** the unbalance mass (90) is remote by about 180° in the circumferential direction from a region (B) in which a line, running approximately perpendicularly with respect to the radial direction, through the engagement point between the cup-spring lever subassembly (22, 34) and the counter-component (72) in the wear adjustment rotation direction (A) intersects an outside (86) of the cup-spring lever (22).

3. Cup-spring lever subassembly according to Claim 1 or 2, **characterized in that** the unbalance mass (90) is formed by the geometry of the cup spring (22) and/or of the drive spring (34).

4. Cup-spring lever subassembly according to one of Claims 1 to 3, **characterized in that** the unbalance mass (90) is formed by an additional mass fastened to the drive spring (34) and/or to the cup-spring (22).

5. Cup-spring lever subassembly according to one of Claims 1 to 4, **characterized in that** the outer annular-disc region (24) of the cup-spring lever (22) is designed with ramp faces (82) which are inclined with respect to the axial direction in the circumferential direction and which are suitable for bearing against a tie rod (74), via which a pressure plate is actuated when the clutch is engaged, in the event of wear adjustment the ramp faces being rotated in relation to the tie rod.

6. Cup-spring lever subassembly according to one of Claims 1 to 5, **characterized in that** the end region (44), secured in relation to the cup-spring lever (22) in the circumferential direction, of the annular part (36) carries a worm wheel (58) which is rotatable about an axis approximately perpendicular to the plane of the cup-spring lever and which is designed with a circumferential toothing (60), into which the pawl (66) engages in a rotation-transmitting manner in one direction, and which is provided on one end face with a worm groove (68) which is in engagement with the counter-component (72), so that rotation of the worm wheel brings about a relative rotation between the cup-spring lever and the counter-component.

7. Self-adjusting friction clutch, containing a cup-spring lever subassembly according to one of Claims 1 to 6.

8. Self-adjusting friction clutch according to Claim 7, **characterized in that** a radial outside (86) of the cup-spring lever (22) is centred by a radially inward-directed inner wall (88) of a component (74), in relation to which the cup-spring lever is rotated in the event of wear adjustment.

## Revendications

1. Module de levier de ressort à coupelle pour l'actionnement d'un embrayage à friction avec compensation de l'usure intégrée, lequel module de levier de ressort à coupelle contient un levier de ressort à coupelle (22) et un ressort d'entraînement (34), lequel levier de ressort à coupelle présente une région de disque annulaire radialement externe (24) continue dans la direction périphérique, de laquelle partent des langues à ressort (23) orientées axialement vers l'intérieur, et lequel ressort d'entraînement présente une partie annulaire (36) pourvue d'une fente radiale (42), de laquelle partent des rayons (32) orientés radialement vers l'intérieur, qui sont fixés aux langues à ressort, une région d'extrémité (44) de la partie annulaire se trouvant d'un côté de la fente étant fixée par rapport au ressort d'entraînement au moins dans la direction périphérique, la région d'extrémité de la partie annulaire se trouvant de l'autre côté de la fente étant pourvue d'un cliquet (66), et l'agencement du ressort d'entraînement sur le levier de ressort à coupelle étant tel que la largeur de la fente (42) soit modifiée dans le cas d'une déformation conique du levier de ressort à coupelle, de sorte que le cliquet, lorsque le module de levier de ressort à coupelle est monté dans l'embrayage à friction, soit adapté pour provoquer, en cas de déformation excessive du levier de ressort à coupelle, une rotation du levier de ressort à coupelle par rapport à un composant opposé (72) de l'embrayage à friction en prise avec le module de levier de ressort à coupelle (22, 34), cette rotation entraînant une compensation de l'usure se produisant sur les garnitures de friction d'un disque d'embrayage, **caractérisé en ce que** le module de levier de ressort à coupelle (22, 34) présente une masse non équilibrée (90) en un endroit qui est éloigné dans la direction périphérique d'un point d'engagement entre le levier de ressort à coupelle (22) et le composant opposé (72) dans la direction opposée à la direction de rotation de rattrapage de l'usure (A).

2. Module de levier de ressort à coupelle selon la revendication 1, **caractérisé en ce que** la masse non équilibrée (90) est éloignée dans la direction périphérique d'environ 180° d'une région (B) dans laquelle une ligne s'étendant approximativement perpendiculairement à la direction radiale à travers le point d'engagement entre le module de levier de ressort à coupelle (22, 34) et le composant opposé (72) dans la direction de rotation de rattrapage de l'usure (A) coupe un côté extérieur (86) du levier de ressort à coupelle (22).

3. Module de levier de ressort à coupelle selon la revendication 1 ou 2, **caractérisé en ce que** la masse non équilibrée (90) est formée par la géométrie du ressort à coupelle (22) et/ou du ressort d'entraînement (34).

4. Module de levier de ressort à coupelle selon l'une quelconque des revendications 1 à 3, **caractérisé en ce que** la masse non équilibrée (90) est formée par une masse supplémentaire fixée au ressort d'entraînement (34) et/ou au ressort à coupelle (22).

5. Module de levier de ressort à coupelle selon l'une quelconque des revendications 1 à 4, **caractérisé en ce que** la région de disque annulaire externe (24) du levier de ressort à coupelle (22) est réalisée avec des surfaces en rampe (82) inclinées dans la direction périphérique par rapport à la direction axiale, qui sont appropriées pour une application contre un tirant (74), par le biais duquel, lors de l'engagement de l'embrayage, un plateau de pression est actionné, les surfaces en rampe étant tournées par rapport au tirant lors d'un rattrapage de l'usure.

6. Module de levier de ressort à coupelle selon l'une quelconque des revendications 1 à 5, **caractérisé en ce que** la région d'extrémité (44) de la partie annulaire (36) fixée dans la direction périphérique par rapport au levier de ressort à coupelle (22) porte une roue à denture hélicoïdale (58) pouvant tourner autour d'un axe approximativement perpendiculaire au plan du levier de ressort à coupelle, laquelle roue à denture hélicoïdale est réalisée avec une denture périphérique (60) dans laquelle s'engage le cliquet (66) avec transmission de la rotation dans une direction, et est pourvue sur un côté frontal d'une gorge hélicoïdale (68), qui est en prise avec le composant opposé (72), de sorte qu'une rotation de la roue à denture hélicoïdale provoque une rotation relative entre le levier de ressort à coupelle et le composant opposé.

7. Embrayage à friction à auto-rattrapage, contenant un module de levier de ressort à coupelle selon l'une quelconque des revendications 1 à 6.

8. Embrayage à friction à auto-rattrapage selon la revendication 7, **caractérisé en ce qu'**un côté extérieur radial (86) du levier de ressort à coupelle (22) est centré par une paroi interne (88) d'un composant (74) orientée radialement vers l'intérieur, par rapport auquel composant le levier de ressort à coupelle est tourné dans le cas d'un rattrapage de l'usure.
